(19) Europäisches Patentamt

European Patent Office

Office européen des brevets

(11) **EP 1 477 965 A1**

(12) **EUROPEAN PATENT APPLICATION**

(43) Date of publication:
**17.11.2004 Bulletin 2004/47**

(51) Int Cl.7: **G10L 11/02**, G10L 15/10

(21) Application number: **04011234.4**

(22) Date of filing: **12.05.2004**

| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **Sugawara, Satoshi**<br>  **Yokohama-shi Kanagawa-ken, 240-0051 (JP)**<br>• **Nomura, Kazuya**<br>  **Sagamihara-shi Kanagawa-ken, 228-0811 (JP)**<br>• **Kaihotsu, Yuji**<br>  **Hirakata-shi Osaka-fu, 573-1145 (JP)** |
|---|---|
| (30) Priority: **13.05.2003 JP 2003134449** | |
| (71) Applicant: **MATSUSHITA ELECTRIC INDUSTRIAL CO., LTD.**<br>**Kadoma-shi, Osaka 571-8501 (JP)** | (74) Representative: **Balsters, Robert et al**<br>**Novagraaf SA**<br>**25, Avenue du Pailly**<br>**1220 Les Avanchets - Geneva (CH)** |

(54) **Spoken keyword recognition apparatus and method**

(57)    Herein disclosed is an instruction signal producing apparatus (100) for producing an instruction signal to be outputted to an external appliance in response to at least one start-up key word, comprising: sound inputting means (101) for digitally inputting a sound including a plurality of isolated sound sections temporally isolated from each other; isolated sound section detecting means (120) for detecting the isolated sound sections of the inputted sound; isolated voice judging means (130) for judging whether or not to recognize the isolated sound section as an isolated voice; speech recognition dictionary storing means (160) for storing speech recognition dictionary including start-up key word information on the start-up key word; and speech recognition performing means (141) for performing the speech recognition to judge whether or not the isolated sound section recognized as the isolated voice represents the start-up key word on the basis of the speech recognition dictionary stored in the speech recognition dictionary storing means (160).

EP 1 477 965 A1

## Description

## BACKGROUND OF THE INVENTION

### 1. Field of the Invention

The present invention relates to an instruction signal producing method and apparatus, and more particularly to an instruction signal producing method of and an apparatus for producing an instruction signal to be outputted to an external appliance in response to one's voice indicative of at least one key word to ensure that the external appliance is activated and controlled with the produced instruction signal.

### 2. Description of the Related Art

Up until now, there have been proposed a wide variety of instruction signal producing apparatus available in process of producing an instruction signal in response to one's voice indicative of at least one key word.

The conventional instruction signal producing apparatus of this type is disclosed in, for example, Japanese Patent Laying-Open Publications Nos. 2001-51694 and 2002-322078. The conventional instruction signal producing apparatus comprises a memory unit having stored therein a speech recognition dictionary, an inputting unit having inputted therein a sound including a plurality of sound sections temporally isolated from each other, a detecting unit for detecting the isolated sound sections of the inputted sound, and a speech recognition performing unit for continuously performing the speech recognition to judge whether or not each of the isolated sound sections of the inputted sound is recognized as a specific key word on the basis of the speech recognition dictionary stored in the memory unit. The conventional instruction signal producing apparatus is adapted to produce an instruction signal to be outputted to an external appliance when the isolated sound section is recognized as the specific key word.

The conventional instruction signal producing apparatus, however, encounters such a problem that at least one isolated sound section of the inputted sound tends to be erroneously recognized as the specific key word in response to an unexpected noise by reason that the speech recognition performing unit continuously performs the speech recognition with respect to each isolated sound section.

## SUMMARY OF THE INVENTION

It is an object of the present invention to provide an instruction signal producing method and apparatus which can prevent each of the isolated sound sections of the inputted sound from being erroneously recognized as the specific key word.

It is another object of the present invention to provide an instruction signal producing method and apparatus which can judge whether or not each of the isolated sound sections of the inputted sound represents the start-up key word at a relatively high efficiency to reduce the processing load without being affected by the unexpected noise.

According to a first aspect of the present invention, there is provided an instruction signal producing apparatus for producing an instruction signal to be outputted to an external appliance in response to at least one start-up key word, comprising: sound inputting means for inputting a sound including a plurality of sound sections isolated from each other; isolated sound section detecting means for detecting each of the isolated sound sections of the inputted sound; isolated voice judging means for judging whether or not to recognize each of the isolated sound sections of the inputted sound as an isolated voice; speech recognition dictionary storing means for storing speech recognition dictionary including start-up key word information on the start-up key word; and speech recognition performing means for performing the speech recognition with respect to the isolated sound section recognized as the isolated voice to judge whether or not the isolated sound section recognized as the isolated voice represents the start-up key word on the basis of the speech recognition dictionary stored in the speech recognition dictionary storing means, and for outputting a predetermined instruction signal to the external appliance when the judgment is made that the isolated sound section recognized as the isolated voice represents the start-up key word.

The speech recognition performing means may include a preliminary speech recognition performing unit for performing the preliminary speech recognition to roughly judge whether or not the isolated sound section recognized as the isolated voice represents the start-up key word on the basis of the speech recognition dictionary stored in the speech recognition dictionary storing means, and a precise speech recognition performing unit for performing the precise speech recognition to precisely judge whether or not the isolated sound section recognized as the isolated voice represents the start-up key word on the basis of the speech recognition dictionary stored in the speech recognition dictionary storing means when the preliminary speech recognition performing unit is operated to judge that the isolated sound section recognized as the isolated voice represents the start-up key word.

The preliminary speech recognition to be performed by the preliminary speech recognition performing unit may be less in processing amount than the precise speech recognition to be performed by the precise speech recognition performing unit.

The isolated voice judging means may be adapted to start to judge to recognize the isolated sound section as the isolated voice when the isolated sound section is detected by the isolated sound section detecting means.

The isolated sound section detecting means may be adapted to detect the end of the inputted sound when the isolated voice judging means is operated to fail to judge that the isolated sound section detected by the isolated sound section detecting means is recognized as the isolated voice, or when one of the preliminary speech recognition performing unit and the precise speech recognition performing unit is operated to fail to judge that the isolated sound section recognized as the isolated voice represents the start-up key word.

The isolated sound section detecting means may include a leading end detecting unit for detecting the leading end of the isolated sound section, a trailing end detecting unit for detecting the trailing end of the isolated sound section, a time period measuring unit for measuring a time period between the leading end and the trailing end before judging whether or not the time period between the leading end and the trailing end exceeds a first threshold level, and the time period between the leading end and the trailing end does not exceed a second threshold level larger than the first threshold level, and a time interval measuring unit for measuring a time interval between the leading end of the current isolated sound section and the trailing end of the prior isolated sound section adjacent to the current isolated sound section before judging whether or not the time interval between the leading end of the current isolated sound section and the trailing end of the prior isolated sound section adjacent to the current isolated sound section exceeds a third threshold level. The isolated sound section detecting means may be adapted to detect the isolated sound sections before selecting at least one isolated sound section to be judged by the isolated voice judging means from among the isolated sound sections on the basis of the judgment of the time period measuring unit and the judgment of the time interval measuring unit.

The isolated voice judging means may include an autocorrelation value calculating unit for calculating an autocorrelation value of the isolated sound section to be judged by the isolated sound section detecting means, and a regression value calculating unit for calculating a regression value of the isolated sound section to be judged by the isolated sound section detecting means. The isolated voice judging means may be adapted to judge whether or not to recognize the isolated sound section to be judged by the isolated sound section detecting means as the isolated voice on the basis of the autocorrelation value calculated by the autocorrelation value calculating unit and the regression value calculated by the regression value calculating unit.

The start-up key word, as the start-up key word information, to be stored in the speech recognition dictionary storing means may consist of at least one word, or a set of words. The speech recognition dictionary to be store in the speech recognition dictionary storing means may include exclusive information on troublesome word, or a set of troublesome words to tend to be erroneously recognized as the start-up key word.

According to a second aspect of the present invention, there is provided an instruction signal producing method of producing an instruction signal to be outputted to an external appliance in response to at least one start-up key word, comprising: a sound inputting step of inputting a sound including a plurality of sound sections isolated from each other; an isolated sound section detecting step of detecting each of the isolated sound sections of the inputted sound; an isolated voice judging step of judging whether or not to recognize each of the isolated sound sections of the inputted sound as an isolated voice; and a speech recognition performing step of performing the speech recognition with respect to the isolated sound section recognized as the isolated voice to judge whether or not the isolated sound section recognized as the isolated voice represents the start-up key word on the basis of the speech recognition dictionary stored in speech recognition dictionary storing means, and for outputting a predetermined instruction signal to the external appliance when the judgment is made that the isolated sound section recognized as the isolated voice represents the start-up key word.

The speech recognition performing step may include a preliminary speech recognition performing step of performing the preliminary speech recognition to roughly judge whether or not the isolated sound section recognized as the isolated voice represents the start-up key word on the basis of the speech recognition dictionary stored in the speech recognition dictionary storing means, and a precise speech recognition performing step of performing the precise speech recognition to precisely judge whether or not the isolated sound section recognized as the isolated voice represents the start-up key word on the basis of the speech recognition dictionary stored in the speech recognition dictionary storing means when the isolated sound section recognized as the isolated voice represents the start-up key word in the preliminary speech recognition performing step.

The preliminary speech recognition to be performed in the preliminary speech recognition performing step may be less in processing amount than the precise speech recognition to be performed in the precise speech recognition performing step.

The isolated voice judging step may be of starting to judge to recognize the isolated sound section as the isolated voice when the isolated sound section is detected in the isolated sound section detecting step.

The isolated sound section detecting step may be of detecting the end of the inputted sound when the isolated voice judging step is of failing to judge that the isolated sound section detected in the isolated sound section detecting step is recognized as the isolated voice, or when one of the preliminary speech recognition performing step and the precise speech recognition performing step is of failing to judge that the isolated sound section recognized as the isolated voice represents the start-up key word.

The isolated sound section detecting step may include a leading end detecting step of detecting the leading end of the isolated sound section, a trailing end detecting step of detecting the trailing end of the isolated sound section, a time period measuring step of measuring a time period between the leading end and the trailing end before judging whether or not the time period between the leading end and the trailing end exceeds a first threshold level, and the time period between the leading end and the trailing end does not exceed a second threshold level larger than the first threshold level, and a time interval measuring step of measuring a time interval between the leading end of the current isolated sound section and the trailing end of the prior isolated sound section adjacent to the current isolated sound section before judging whether or not the time interval between the leading end of the current isolated sound section and the trailing end of the prior isolated sound section adjacent to the current isolated sound section exceeds a third threshold level.

The isolated sound section detecting step may be of detecting the isolated sound sections before selecting at least one isolated sound section to be judged in the isolated voice judging step from among the isolated sound sections on the basis of the judgment of the time period measuring step and the judgment of the time interval measuring step.

The isolated voice judging step may include an autocorrelation value calculating step of calculating an autocorrelation value of the isolated sound section to be judged in the isolated sound section detecting step, and a regression value calculating step of calculating a regression value of the isolated sound section to be judged in the isolated sound section detecting step. The isolated voice judging step may be of judging whether or not to recognize the isolated sound section to be judged in the isolated sound section detecting step as the isolated voice on the basis of the autocorrelation value calculated in the autocorrelation value calculating step and the regression value calculated in the regression value calculating step.

The start-up key word, as the start-up key word information, to be stored in the speech recognition dictionary storing means may consist of at least one word, or a set of words. The speech recognition dictionary to be store in the speech recognition dictionary storing means may include exclusive information on troublesome word, or a set of troublesome words to tend to be erroneously recognized as the start-up key word.

## BRIEF DESCRIPTION OF THE DRAWINGS

The features and advantages of an instruction signal producing apparatus according to the present invention will be more clearly understood from the following description taken in conjunction with the accompanying drawings in which:

FIG. 1 is a block diagram of the instruction signal producing apparatus according to the preferred embodiment of the present invention;
FIG. 2 is a flowchart showing an operation of the instruction signal producing apparatus according to the preferred embodiment of the present invention; and
FIG. 3 is a schematic view showing the speech recognition dictionary stored in the speech recognition dictionary storing unit of the instruction signal producing apparatus according to the preferred embodiment of the present invention.

## DESCRIPTION OF THE PREFERRED EMBODIMENTS

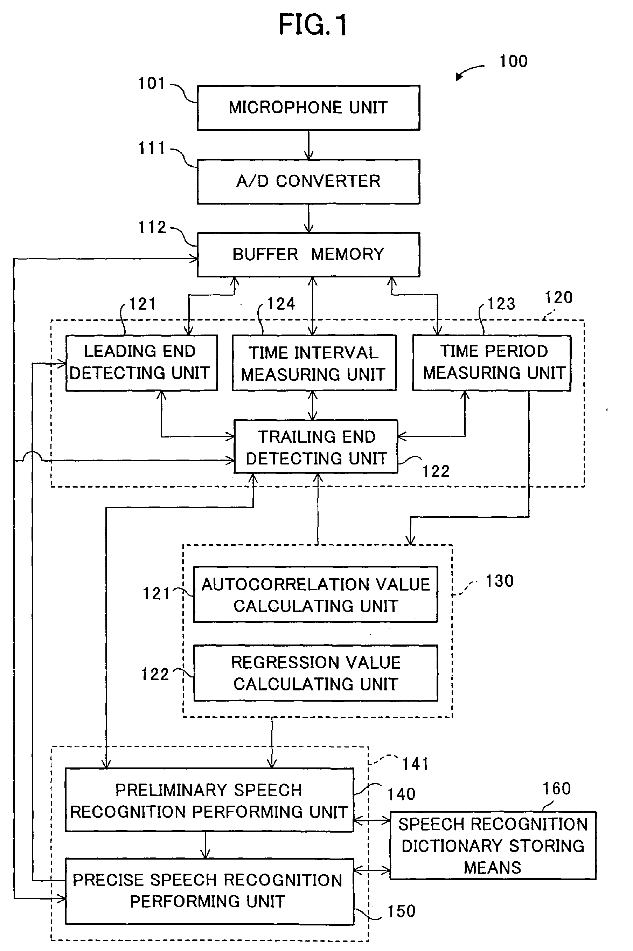

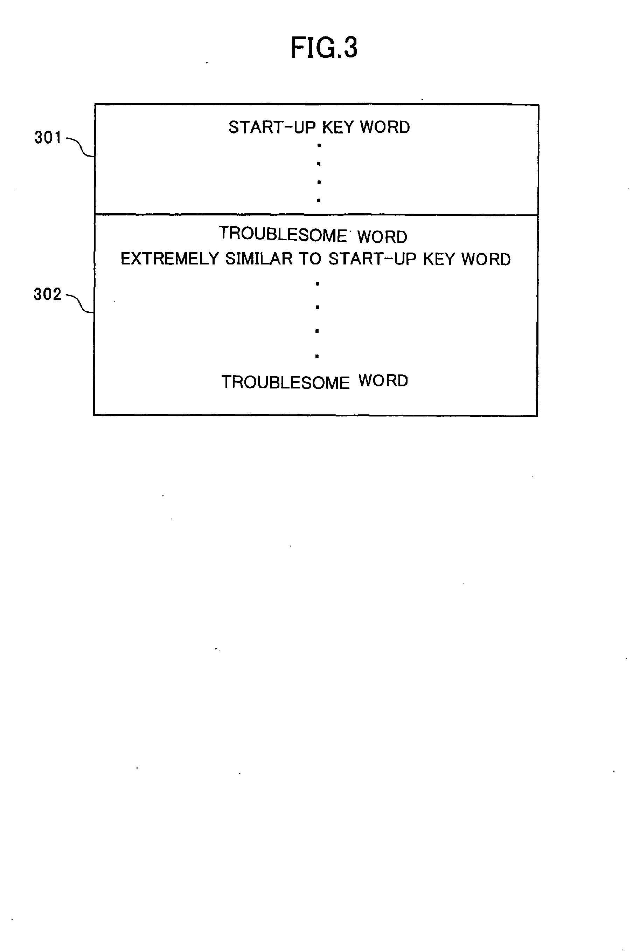

Referring now to FIGS. 1 to 3 of the drawings, there is shown one preferred embodiment of the instruction signal producing apparatus according to the present invention.

The following description will now be directed to the constitution of the instruction signal producing apparatus according to the preferred embodiment of the present invention.

The instruction signal producing apparatus 100 is shown in FIG. 1 as comprising a microphone unit 101 having inputted therein a sound consisting of a plurality of sound sections temporally isolated from each other, the microphone unit 101 being adapted to produce an analog sound signal indicative of the sound, and an analog-to-digital converting unit 111 (hereinafter simply referred to as "A/D converter") for converting the analog sound signal produced by the microphone unit 101 to a digital sound signal. Here, the microphone unit 101 constitutes sound inputting means.

The instruction signal producing apparatus 100 further comprises a buffer memory 112 having stored therein digital data indicative of the digital sound signal converted by the A/D converter 111. The digital data is constituted by a plurality of sound segments respectively lying in respective sequential frames connected to each other in serial.

Here, the sequential frames each may have the period of time such as for example 10[msec], 20 [msec], or 30 [msec]. The buffer memory 112 may constitute a ring buffer to perform first-in and first-out operations.

The instruction signal producing apparatus 100 further comprises an instruction signal producing program storing unit (not shown) having stored therein an instruction signal producing program, a central processing unit (hereinafter simply referred to as "CPU") for executing the instruction signal producing program stored in the instruction signal producing program storing unit to produce an instruction signal to be outputted to an external appliance (not sown) in response to one's voice indicative of at least one key word to ensure that the external appliance is activated and controlled with the produced instruction signal, and a speech recognition dictionary storing unit 160 for storing speech recognition dictionary including start-up key word information on the start-up key word.

Here, the term "start-up key word" is intended to indicate a trigger signal to have the external appliance perform a start-up operation, or to have the external appliance start to execute an application program in such a way that the instruction signal producing apparatus produces the trigger signal to be outputted to the external appliance by receiving one's voice indicative of the start-up key word.

Here, the speech recognition dictionary storing unit 160 constitutes speech recognition dictionary storing means, while the CPU constitutes isolated sound section detecting means 120 for detecting each of the isolated sound sections of the inputted sound, isolated voice judging means 130 for judging whether or not to recognize each of the isolated sound sections of the inputted sound as an isolated voice, speech recognition performing means 141 for performing the speech recognition with respect to the isolated sound section recognized as the isolated voice to judge whether or not the isolated sound section recognized as the isolated voice represents the start-up key word on the basis of the speech recognition dictionary stored in the speech recognition dictionary storing means 160, and for outputting a predetermined instruction signal to the external appliance when the judgment is made that the isolated sound section recognized as the isolated voice represents the start-up key word.

The speech recognition performing means 141 includes a preliminary speech recognition performing unit 140 for performing the preliminary speech recognition to roughly judge whether or not the isolated sound section recognized as the isolated voice represents the start-up key word on the basis of the speech recognition dictionary stored in the speech recognition dictionary storing means 160, and a precise speech recognition performing unit 150 for performing the precise speech recognition to precisely judge whether or not the isolated sound section recognized as the isolated voice represents the start-up key word on the basis of the speech recognition dictionary stored in the speech recognition dictionary storing means 160 when the preliminary speech recognition performing unit 140 is operated to judge that the isolated sound section recognized as the isolated voice represents the start-up key word.

Here, the isolated sound sections to be detected by the isolated sound section detecting means 120 each has a leading end and a trailing end.

The isolated sound section detecting means 120 includes a leading end detecting unit 121 for detecting the leading end of the isolated sound section, a trailing end detecting unit 122 for detecting the trailing end of the isolated sound section, a time period measuring unit 123 for measuring a time period between the leading end and the trailing end before judging whether or not the time period between the leading end and the trailing end exceeds a first threshold level, and the time period between the leading end and the trailing end does not exceed a second threshold level larger than the first threshold level, and a time interval measuring unit 124 for measuring a time interval between the leading end of the current isolated sound section and the trailing end of the prior isolated sound section adjacent to the current isolated sound section before judging whether or not the time interval between the leading end of the current isolated sound section and the trailing end of the prior isolated sound section adjacent to the current isolated sound section exceeds a third threshold level.

The leading end detecting unit 121 is adapted to detect each of the leading ends of the isolated sound sections of the inputted sound by judging whether or not the sound segment lying in each sequential frame is increased over a predetermined noise level, while the trailing end detecting unit 122 is adapted to detect each of the trailing ends of the isolated sound sections of the inputted sound by judging whether or not the sound segment lying in each sequential frame is decreased below the predetermined noise level.

Here, the instruction signal producing apparatus 100 can prevent each of the isolated sound sections of the inputted sound from being erroneously recognized as the specific key word in response to an unexpected noise, babble of voices, and other outside sounds by reason that the microphone unit 101, the A/D converter 111, the buffer memory 112, and the isolated sound section detecting means 120 each always assumes an operative state thereof to perform the respective operation.

On the other hand, the instruction signal producing apparatus 100 can judge whether or not each of the isolated sound sections of the inputted sound represents the start-up key word at a relatively high efficiency to reduce the processing load without being affected by the unexpected noise, babble of voices, and other outside sounds by reason that the isolated voice judging means 130 is adapted to assume an operative state thereof to judge whether or not to recognize each of the isolated sound sections of the inputted sound as an isolated voice when the isolated sound section of the inputted sound is detected by the isolated sound section detecting means 120, and the preliminary speech recognition performing unit 140 is adapted to assume an operative state thereof to perform the preliminary speech recognition to roughly judge whether or not the isolated sound section recognized as the isolated voice represents the start-up key word when the judgment is made that the isolated sound section of the inputted sound is recognized as an isolated voice.

The isolated voice judging means 130 includes an autocorrelation value calculating unit 131 for calculating an autocorrelation value of the isolated sound section to be judged by the isolated sound section detecting means 120, and a regression value calculating unit 132 for calculating a regression value of the isolated sound section to be judged by the isolated sound section detecting means 120 on the basis of following equation (1).

$$d R n (j) = (R n (j + 1) - R n (j - 1)) / 2 \qquad (1)$$

Here, the legends "dRn(j)" and "Rn(j)" respectively represent a regression value and n-th autocorrelation value with respect to sequential frame "j".

The following description will now be directed to the instruction signal producing program to be executed by the CPU forming part of the instruction signal producing apparatus according to the preferred embodiment of the present invention.

The instruction signal producing program includes an isolated voice judging step of judging whether or not to recognize each of the isolated sound sections of the inputted sound as an isolated voice, and a speech recognition performing step of performing the speech recognition with respect to the isolated sound section recognized as the isolated voice to judge whether or not the isolated sound section recognized as the isolated voice represents the start-up key word on the basis of the speech recognition dictionary stored in speech recognition dictionary storing unit 160, and for outputting a predetermined instruction signal to the external appliance when the judgment is made that the isolated sound section recognized as the isolated voice represents the start-up key word.

The speech recognition performing step includes a preliminary speech recognition performing step of performing the preliminary speech recognition to roughly judge whether or not the isolated sound section recognized as the isolated voice represents the start-up key word on the basis of the speech recognition dictionary stored in the speech recognition dictionary storing means 160, and a precise speech recognition performing step of performing the precise speech recognition to precisely judge whether or not the isolated sound section recognized as the isolated voice represents the start-up key word on the basis of the speech recognition dictionary stored in the speech recognition dictionary storing means 160 when the isolated sound section recognized as the isolated voice represents the start-up key word in the preliminary speech recognition performing step.

Here, the preliminary speech recognition to be performed in the preliminary speech recognition performing step is less in processing amount than the precise speech recognition to be performed in the precise speech recognition performing step.

The isolated voice judging step is of starting to judge to recognize the isolated sound section as the isolated voice when the isolated sound section is detected in the isolated sound section detecting step.

The isolated sound section detecting step is of detecting the end of the inputted sound when the isolated voice judging step is of failing to judge that the isolated sound section detected in the isolated sound section detecting step is recognized as the isolated voice, or when one of the preliminary speech recognition performing step and the precise speech recognition performing step is of failing to judge that the isolated sound section recognized as the isolated voice represents the start-up key word.

The isolated sound section detecting step includes a leading end detecting step of detecting the leading end of the isolated sound section, a trailing end detecting step of detecting the trailing end of the isolated sound section, a time period measuring step of measuring a time period between the leading end and the trailing end before judging whether or not the time period between the leading end and the trailing end exceeds a first threshold level, and the time period between the leading end and the trailing end does not exceed a second threshold level larger than the first threshold level, and a time interval measuring step of measuring a time interval between the leading end of the current isolated sound section and the trailing end of the prior isolated sound section adjacent to the current isolated sound section before judging whether or not the time interval between the leading end of the current isolated sound section and the trailing end of the prior isolated sound section adjacent to the current isolated sound section exceeds a third threshold level.

The isolated sound section detecting step is of detecting the isolated sound sections before selecting at least one isolated sound section to be judged in the isolated voice judging step from among the isolated sound sections on the basis of the judgment of the time period measuring step and the judgment of the time interval measuring step.

The isolated voice judging step includes an autocorrelation value calculating step of calculating an autocorrelation value of the isolated sound section to be judged in the isolated sound section detecting step, and a regression value calculating step of calculating a regression value of the isolated sound section to be judged in the isolated sound section detecting step.

The isolated voice judging step is of judging whether or not to recognize the isolated sound section to be judged in the isolated sound section detecting step as the isolated voice on the basis of the autocorrelation value calculated in the autocorrelation value calculating step and the regression value calculated in the regression value calculating step.

The CPU is adapted to receive the digital data one sequential frame at a time from the buffer memory 112.

Here, the isolated sound section detecting means 120, i.e. the CPU may be adapted to judge whether or not the isolated sound section of the inputted sound exists in each sequential frame before detecting the isolated sound sections of the inputted sound.

The isolated voice judging means 130, i.e. the CPU is adapted to judge whether or not to recognize the isolated sound section to be judged by the isolated sound section detecting means 120, i.e. the CPU as the isolated voice on the basis of the autocorrelation value calculated by the autocorrelation value calculating unit 131 and the regression value calculated by the regression value calculating unit 132.

The preliminary speech recognition performing means 140, i.e. the CPU is adapted to perform the preliminary speech recognition to roughly judge whether or not the isolated sound section recognized as the isolated voice represents the start-up key word on the basis of the speech recognition dictionary stored in the speech recognition dictionary storing unit 160, for example, every two or more sequential frames.

Here, the external appliance may be replaced by a navigation apparatus, an audio sound reproducing apparatus, an in-vehicle apparatus, and other electronic apparatus.

The words "voice navi" may be registered, as the start-up key word information, in the speech recognition dictionary storing unit 160. The instruction signal producing apparatus 100 is adapted to produce an instruction signal to the navigation apparatus in response to the words "voice navi".

The speech recognition dictionary to be stored in speech recognition dictionary storing unit 160 may include two or more different information including a start-up key word information with respect to the navigation apparatus, start-up key word information with respect to the audio sound reproducing apparatus, and others, while the precise speech recognition performing means may be adapted to perform the precise speech recognition to precisely judging whether or not the isolated sound section recognized as the isolated voice represents the start-up key word on the basis of the speech recognition dictionary with respect to targeted external appliance.

The precise speech recognition performing unit 150 is adapted to perform the precise speech recognition to precisely judging whether or not the isolated sound section recognized as the isolated voice represents the start-up key word on the basis of the speech recognition dictionary stored in the speech recognition dictionary storing unit 160 in every sequential frame after receiving the digital sound data with respect to the isolated sound section recognized as the start-up key word from the buffer memory 112 when the preliminary speech recognition performing unit 140 is operated to judge that the isolated sound section recognized as the isolated voice represents the start-up key word.

The following description will be directed to the instruction signal producing method according to the preferred embodiment of the present invention.

The instruction signal producing method comprises a sound inputting step of digitally inputting a sound including a plurality of isolated sound sections temporally isolated from each other; an isolated sound section detecting step of detecting the isolated sound sections of the inputted sound; an isolated voice judging step of judging whether or not to recognize the isolated sound section as an isolated voice; and a speech recognition performing step of performing the speech recognition to judge whether or not the isolated sound section recognized as the isolated voice represents the start-up key word on the basis of speech recognition dictionary stored in speech recognition dictionary storing unit 160.

The speech recognition performing step includes a preliminary speech recognition performing step of performing the preliminary speech recognition to roughly judging whether or not the isolated sound section recognized as the isolated voice represents the start-up key word on the basis of the speech recognition dictionary stored in the speech recognition dictionary storing unit 160, and a precise speech recognition performing step of performing the precise speech recognition to precisely judging whether or not the isolated sound section recognized as the isolated voice represents the start-up key word on the basis of the speech recognition dictionary stored in the speech recognition dictionary storing unit 160 when the isolated sound section recognized as the isolated voice represents the start-up key word in the preliminary speech recognition performing step.

The preliminary speech recognition to be performed in the preliminary speech recognition performing step is less in processing amount than the precise speech recognition to be performed in the precise speech recognition performing step.

The isolated voice judging step is of starting to judge to recognize the isolated sound section as the isolated voice when the isolated sound section is detected in the isolated sound section detecting step.

The isolated sound section detecting step is of detecting the end of the inputted sound when the isolated voice judging step is of failing to judge that the isolated sound section detected in the isolated sound section detecting step is recognized as the isolated voice, or when one of the preliminary speech recognition performing step and the precise speech recognition performing step is of failing to judge that the isolated sound section recognized as the isolated voice represents the start-up key word.

The isolated sound section detecting step includes a leading end detecting step of detecting the leading end of the isolated sound section, a trailing end detecting step of detecting the trailing end of the isolated sound section, a time period measuring step of measuring a time period between the leading end and the trailing end before judging whether or not the time period between the leading end and the trailing end exceeds a first threshold level, and the time period between the leading end and the trailing end does not exceed a second threshold level larger than the first threshold level, and a time interval measuring step of measuring a time interval between the leading end of the current isolated sound section and the trailing end of the prior isolated sound section adjacent to the current isolated sound section before judging whether or not the time interval between the leading end of the current isolated sound section and the trailing end of the prior isolated sound section adjacent to the current isolated sound section exceeds a third threshold level.

The isolated sound section detecting step is of detecting the isolated sound sections before selecting at least one isolated sound section to be judged in the isolated voice judging step from among the isolated sound sections on the basis of the judgment of the time period measuring step and the judgment of the time interval measuring step.

The isolated voice judging step includes an autocorrelation value calculating step of calculating an autocorrelation value of the isolated sound section to be judged in the isolated sound section detecting step, and a regression value calculating step of calculating a regression value of the isolated sound section to be judged in the isolated sound section detecting step.

The isolated voice judging step is of judging whether or not to recognize the isolated sound section to be judged in the isolated sound section detecting step as the isolated voice on the basis of the autocorrelation value calculated in the autocorrelation value calculating step and the regression value calculated in the regression value calculating step.

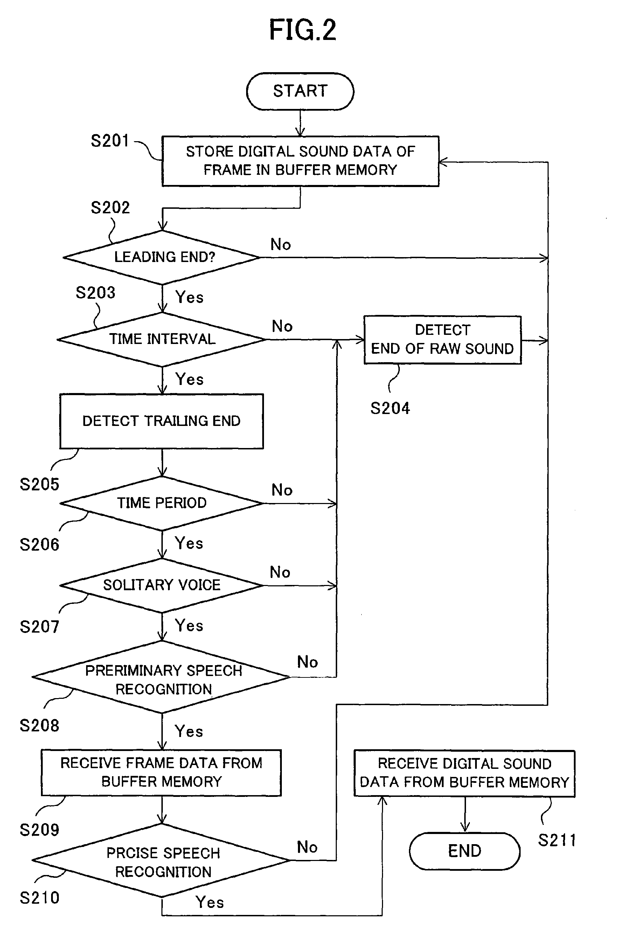

The operation of the instruction signal producing apparatus according to the preferred embodiment of the present invention will now be described hereinafter with reference to FIG. 2.

The digital sound data lying in the sequential frame is stored in the buffer memory 112 in the step S201.

The leading end detecting unit 121 is operated to detect the leading end of the isolated sound section on the basis of the digital sound data stored in the buffer memory 112 in the step S202.

When the answer in the step S202 is in affirmative "YES", i.e., the leading end of the isolated sound section exists in the sequential frame, the step S202 proceeds to the step S203. When, on the other hand, the answer in the step S202 is in negative "NO", i.e., the leading end of the isolated sound section does not exist in the sequential frame, the step S202 proceeds to the step S201.

The time interval measuring unit 124 is operated to measure a time interval between the leading end of the current isolated sound section and the trailing end of the prior isolated sound section adjacent to the current isolated sound section before judging whether or not the time interval between the leading end of the current isolated sound section and the trailing end of the prior isolated sound section adjacent to the current isolated sound section exceeds a third threshold level in the step S203.

When the answer in the step S203 is in affirmative "YES", i.e., the digital sound sections each smaller in signal level than the predetermined threshold level are continuously detected over the predetermined period of time, the step S203 proceeds to the step S205. When, on the other hand, the answer in the step S202 is in negative "NO", i.e., the digital sound sections each smaller in signal level than the predetermined threshold level are not continuously detected over the predetermined period of time, the step S203 proceeds to the step S204.

The isolated sound section detecting means 120 is operated to detect the end of the inputted sound when the isolated voice judging means 130 is operated to fail to judge that the isolated sound section detected by the isolated sound section detecting means 120 is recognized as the isolated voice, or when one of the preliminary speech recognition performing unit 140 and the precise speech recognition performing unit 150 is operated to fail to judge that the isolated sound section recognized as the isolated voice represents the start-up key word in the step S204.

The trailing end detecting unit 122 is operated to detect the trailing end of the isolated sound section in the step S205.

The time period measuring unit 123 is operated to measure a time period between the leading end and the trailing end before judging whether or not the time period between the leading end and the trailing end exceeds a first threshold level, and the time period between the leading end and the trailing end does not exceed a second threshold level larger than the first threshold level in the step S206.

The isolated voice judging means 130 is operated to judge whether or not to recognize the isolated sound section as an isolated voice in the step S207.

The preliminary speech recognition performing unit 140 is operated to perform the preliminary speech recognition to roughly judge whether or not the isolated sound section recognized as the isolated voice represents the start-up key word on the basis of the speech recognition dictionary stored in the speech recognition dictionary storing unit 160 in the step S208.

The precise speech recognition performing unit 150 is operated to perform the precise speech recognition to precisely judge whether or not the isolated sound section recognized as the isolated voice represents the start-up key word on the basis of the speech recognition dictionary stored in the speech recognition dictionary storing unit 160 when the preliminary speech recognition performing unit 140 is operated to judge that the isolated sound section recognized as the isolated voice represents the start-up key word in the step S210.

The instruction signal producing apparatus 100 is operated to produce an instruction signal to be inputted to the external appliance when the judgment is made that the isolated sound section recognized as the isolated voice represents the start-up key word in the step S211.

The following description will be directed to the start-up key word information stored in the speech recognition dictionary storing unit.

The start-up key word information 301 to be stored in the speech recognition dictionary storing unit 160 consists of at least one word, or a set of words. The speech recognition dictionary to be stored in the speech recognition dictionary storing unit 160 includes exclusive information 302 on troublesome word, or a set of troublesome words to tend to be erroneously recognized as the start-up key word.

When, as the start-up key word, the words "designate destination" is registered in the speech recognition dictionary storing unit 160, the word "destination" and the words "set destination" and other related words can be recognized as the start-up key word by the speech recognition performing means forming part of the instruction signal producing apparatus.

When, for example, two or more start-up key words is registered in the speech recognition dictionary storing unit 160, it is desirable that the isolated sound sections indicative of the start-up key words is similar in length to each other.

The instruction signal producing method and apparatus can judge whether or not each of the isolated sound sections represents the start-up key word at a relatively high efficiency to reduce the processing load while preventing the isolated sound section from being erroneously recognized as the start-up key word in response to an unexpected noise by reason that the speech recognition dictionary to be stored in the speech recognition dictionary storing unit 160 includes the exclusive information 302 on troublesome word, or a set of troublesome words.

Here, the exclusive information 302 may include cepstrum distance information on the cepstrum distance between the start-up key word the troublesome word.

The speech recognition performing means may be adapted to judge whether or not the cepstrum distance information on the cepstrum distance between the start-up key word and the troublesome word is larger than a predetermined threshold distance before judging whether or not each of the isolated sound sections represents the start-up key word on the basis of the cepstrum distance between the start-up key word and the troublesome word.

From the above detailed description, it will be understood that the instruction signal producing method and apparatus can prevent each of the isolated sound sections of the inputted sound from being erroneously recognized as the start-up key word to produce an instruction signal to be outputted to the external appliance in response to the start-up key word.

The instruction signal producing method and apparatus, furthermore, can judge whether or not to each of the isolated sound sections represents the start-up key word at a relatively high efficiency to reduce the processing load.

The following description will be directed to the case that the instruction signal producing apparatus is installed in an automotive vehicle.

The instruction signal producing apparatus is adapted to produce an instruction signal to be outputted to a navigation apparatus to be installed in the automotive vehicle in response to, as a trigger signal, at least one start-up key word to be represented by one's voice.

While there has been described in the foregoing embodiment about the fact that the instruction signal producing apparatus is adapted to produce an instruction signal to be outputted to a navigation apparatus to be installed in the automotive vehicle in response to, as a trigger signal, at least one start-up key word to be represented by one's voice, the navigation apparatus may comprise sound inputting means for digitally inputting a sound including a plurality of isolated sound sections temporally isolated from each other, isolated sound section detecting means for detecting the isolated sound sections of the inputted sound, isolated voice judging means for judging whether or not to recognize the isolated sound section as an isolated voice, speech recognition dictionary storing unit for storing speech recognition dictionary including start-up key word information on the start-up key word, and speech recognition performing means for performing the speech recognition to judge whether or not the isolated sound section recognized as the isolated voice represents the start-up key word on the basis of the speech recognition dictionary stored in the speech recognition dictionary storing unit.

The speech recognition performing means forming part of the navigation apparatus may include a preliminary speech recognition performing unit for performing the preliminary speech recognition to roughly judging whether or not the isolated sound section recognized as the isolated voice represents the start-up key word on the basis of the speech recognition dictionary stored in the speech recognition dictionary storing unit, and a precise speech recognition performing unit for performing the precise speech recognition to precisely judging whether or not the isolated sound section recognized as the isolated voice represents the start-up key word on the basis of the speech recognition dictionary stored in the speech recognition dictionary storing unit when the preliminary speech recognition performing unit is operated to judge that the isolated sound section recognized as the isolated voice represents the start-up key word.

The instruction signal producing apparatus can judge whether or not to each of the isolated sound sections represents the start-up key word at a relatively high efficiency to still more effectively reduce the processing load with respect to the speech recognition process by reason that speech recognition performing means may include a preliminary speech recognition performing means for performing the preliminary speech recognition to roughly judging whether or not the isolated sound section recognized as the isolated voice represents the start-up key word on the basis of the speech recognition dictionary stored in the speech recognition dictionary storing unit, and a precise speech recognition performing means for performing the precise speech recognition to precisely judging whether or not the isolated sound section recognized as the isolated voice represents the start-up key word on the basis of the speech recognition dictionary stored in the speech recognition dictionary storing unit when the preliminary speech recognition performing means is operated to judge that the isolated sound section recognized as the isolated voice represents the start-up key word.

While there has been described in the foregoing embodiment about the fact that the instruction signal producing apparatus is adapted to produce an instruction signal to be outputted to a navigation apparatus to be installed in the automotive vehicle in response to, as a trigger signal, at least one start-up key word to be represented by one's voice, the instruction signal producing apparatus may be installed in a lighting equipment, a mobile phone, and other electronic appliance.

When, for example, the instruction signal producing apparatus is installed in a lighting equipment, the instruction signal producing apparatus is adapted to produce an instruction signal to be outputted to the lighting equipment in response to the one start-up key word to be represented by one's voice to have the lighting equipment selectively assume ON/OFF states.

While the subject invention has been described with relation to the preferred embodiment, various modifications and adaptations thereof will now be apparent to those skilled in the art as far as such modifications and adaptations fall in the scope of the appended claims intended to be covered thereby.

## Claims

1. An instruction signal producing apparatus (100) for producing an instruction signal to be outputted to an external appliance in response to at least one start-up key word, comprising:

 sound inputting means (101) for inputting a sound including a plurality of sound sections isolated from each other;
 isolated sound section detecting means (120) for detecting each of said isolated sound sections of said inputted sound;
 isolated voice judging means (130) for judging whether or not to recognize each of said isolated sound sections of said inputted sound as an isolated voice;
 speech recognition dictionary storing means (160) for storing speech recognition dictionary including start-up key word information on said start-up key word; and
 speech recognition performing means (141) for performing the speech recognition with respect to said isolated sound section recognized as said isolated voice to judge whether or not said isolated sound section recognized as said isolated voice represents said start-up key word on the basis of said speech recognition dictionary stored in said speech recognition dictionary storing means (160), and for outputting a predetermined instruction signal to said external appliance when the judgment is made that said isolated sound section recognized as said isolated voice represents said start-up key word.

2. An instruction signal producing apparatus (100) as set forth in claim 1, in which said speech recognition performing means (141) includes a preliminary speech recognition performing unit (140) for performing the preliminary speech recognition to roughly judge whether or not said isolated sound section recognized as said isolated voice represents said start-up key word on the basis of said speech recognition dictionary stored in said speech recognition dictionary storing means (160), and a precise speech recognition performing unit (150) for performing the precise speech recognition to precisely judge whether or not said isolated sound section recognized as said isolated voice represents said start-up key word on the basis of said speech recognition dictionary stored in said speech recognition dictionary storing means (160) when said preliminary speech recognition performing unit (140) is operated to judge that said isolated sound section recognized as said isolated voice represents said start-up key word.

3. An instruction signal producing apparatus (100) as set forth in claim 2, in which said preliminary speech recognition to be performed by said preliminary speech recognition performing unit (140) is less in processing amount than said precise speech recognition to be performed by said precise speech recognition performing unit (150).

4. An instruction signal producing apparatus (100) as set forth in claim 1, in which said isolated voice judging means (130) is adapted to start to judge to recognize said isolated sound section as said isolated voice when said isolated sound section is detected by said isolated sound section detecting means (120).

5. An instruction signal producing apparatus (100) as set forth in claim 1, in which said isolated sound section detecting means (120) is adapted to detect the end of said inputted sound when said isolated voice judging means (130) is operated to fail to judge that said isolated sound section detected by said isolated sound section detecting means (120) is recognized as said isolated voice, or when one of said preliminary speech recognition performing unit (140) and said precise speech recognition performing unit (150) is operated to fail to judge that said isolated sound section recognized as said isolated voice represents said start-up key word.

6. An instruction signal producing apparatus (100) as set forth in claim 1, in which

said isolated sound sections to be detected by said isolated sound section detecting means (120) each has a leading end and a trailing end, in which

said isolated sound section detecting means (120) includes a leading end detecting unit (121) for detecting said leading end of said isolated sound section, a trailing end detecting unit (122) for detecting said trailing end of said isolated sound section, a time period measuring unit (123) for measuring a time period between said leading end and said trailing end before judging whether or not said time period between said leading end and said trailing end exceeds a first threshold level, and said time period between said leading end and said trailing end does not exceed a second threshold level larger than said first threshold level, and a time interval measuring unit (124) for measuring a time interval between said leading end of said current isolated sound section and said trailing end of said prior isolated sound section adjacent to said current isolated sound section before judging whether or not said time interval between said leading end of said current isolated sound section and said trailing end of said prior isolated sound section adjacent to said current isolated sound section exceeds a third threshold level, and in which

said isolated sound section detecting means (120) is adapted to detect said isolated sound sections before selecting at least one isolated sound section to be judged by said isolated voice judging means (130) from among said isolated sound sections on the basis of the judgment of said time period measuring unit (123) and the judgment of said time interval measuring unit (124).

7. An instruction signal producing apparatus (100) as set forth in claim 1, in which said isolated voice judging means (130) includes an autocorrelation value calculating unit (131) for calculating an autocorrelation value of said isolated sound section to be judged by said isolated sound section detecting means (120), and a regression value calculating unit (132) for calculating a regression value of said isolated sound section to be judged by said isolated sound section detecting means (120), and in which

said isolated voice judging means (130) is adapted to judge whether or not to recognize said isolated sound section to be judged by said isolated sound section detecting means (120) as said isolated voice on the basis of said autocorrelation value calculated by said autocorrelation value calculating unit (131) and said regression value calculated by said regression value calculating unit (132).

8. An instruction signal producing apparatus (100) as set forth in claim 3, in which said start-up key word, as said start-up key word information, to be stored in said speech recognition dictionary storing means (160) consists of at least one word, or a set of words, and in which

said speech recognition dictionary to be stored in said speech recognition dictionary storing means (160) includes exclusive information on troublesome word, or a set of troublesome words to tend to be erroneously recognized as said start-up key word.

9. An instruction signal producing method of producing an instruction signal to be outputted to an external appliance in response to at least one start-up key word, comprising:

a sound inputting step of inputting a sound including a plurality of sound sections isolated from each other;
an isolated sound section detecting step of detecting each of said isolated sound sections of said inputted sound;
an isolated voice judging step of judging whether or not to recognize each of said isolated sound sections of said inputted sound as an isolated voice; and
a speech recognition performing step of performing the speech recognition with respect to said isolated sound section recognized as said isolated voice to judge whether or not said isolated sound section recognized as said isolated voice represents said start-up key word on the basis of said speech recognition dictionary stored in speech recognition dictionary storing means (160), and for outputting a predetermined instruction signal to said external appliance when the judgment is made that said isolated sound section recognized as said isolated voice represents said start-up key word.

10. An instruction signal producing method as set forth in claim 9, in which said speech recognition performing step includes a preliminary speech recognition performing step of performing the preliminary speech recognition to roughly judge whether or not said isolated sound section recognized as said isolated voice represents said start-up key word on the basis of said speech recognition dictionary stored in said speech recognition dictionary storing means (160), and a precise speech recognition performing step of performing the precise speech recognition to precisely judge whether or not said isolated sound section recognized as said isolated voice represents said start-up key word on the basis of said speech recognition dictionary stored in said speech recognition dictionary storing means (160) when said isolated sound section recognized as said isolated voice represents said start-up key word in said preliminary speech recognition performing step.

11. An instruction signal producing method as set forth in claim 10, in which said preliminary speech recognition to be performed in said preliminary speech recognition performing step is less in processing amount than said precise speech recognition to be performed in said precise speech recognition performing step.

12. An instruction signal producing method as set forth in claim 9, in which said isolated voice judging step is of starting to judge to recognize said isolated sound section as said isolated voice when said isolated sound section is detected in said isolated sound section detecting step.

13. An instruction signal producing method as set forth in claim 9, in which said isolated sound section detecting step is of detecting the end of said inputted sound when said isolated voice judging step is of failing to judge that said isolated sound section detected in said isolated sound section detecting step is recognized as said isolated voice, or when one of said preliminary speech recognition performing step and said precise speech recognition performing step is of failing to judge that said isolated sound section recognized as said isolated voice represents said start-up key word.

14. An instruction signal producing method as set forth in claim 9, in which

said isolated sound sections to be detected in said isolated sound section detecting step each has a leading end and a trailing end, in which

said isolated sound section detecting step includes a leading end detecting step of detecting said leading end of said isolated sound section, a trailing end detecting step of detecting said trailing end of said isolated sound section, a time period measuring step of measuring a time period between said leading end and said trailing end before judging whether or not said time period between said leading end and said trailing end exceeds a first threshold level, and said time period between said leading end and said trailing end does not exceed a second threshold level larger than said first threshold level, and a time interval measuring step of measuring a time interval between said leading end of said current isolated sound section and said trailing end of said prior isolated sound section adjacent to said current isolated sound section before judging whether or not said time interval between said leading end of said current isolated sound section and said trailing end of said prior isolated sound section adjacent to said current isolated sound section exceeds a third threshold level, and in which

said isolated sound section detecting step is of detecting said isolated sound sections before selecting at least one isolated sound section to be judged in said isolated voice judging step from among said isolated sound sections on the basis of the judgment of said time period measuring step and the judgment of said time interval measuring step.

15. An instruction signal producing method as set forth in claim 9, in which said isolated voice judging step includes an autocorrelation value calculating step of calculating an autocorrelation value of said isolated sound section to be judged in said isolated sound section detecting step, and a regression value calculating step of calculating a regression value of said isolated sound section to be judged in said isolated sound section detecting step, and in which

said isolated voice judging step is of judging whether or not to recognize said isolated sound section to be judged in said isolated sound section detecting step as said isolated voice on the basis of said autocorrelation value calculated in said autocorrelation value calculating step and said regression value calculated in said regression value calculating step.

EP 1 477 965 A1

# FIG.1

100

101 — MICROPHONE UNIT

111 — A/D CONVERTER

112 — BUFFER MEMORY

120

121 LEADING END DETECTING UNIT

124 TIME INTERVAL MEASURING UNIT

123 TIME PERIOD MEASURING UNIT

122 TRAILING END DETECTING UNIT

130

121 AUTOCORRELATION VALUE CALCULATING UNIT

122 REGRESSION VALUE CALCULATING UNIT

141 / 140 PRELIMINARY SPEECH RECOGNITION PERFORMING UNIT

150 PRECISE SPEECH RECOGNITION PERFORMING UNIT

160 SPEECH RECOGNITION DICTIONARY STORING MEANS

EP 1 477 965 A1

# FIG.2

# FIG.3

301

START-UP KEY WORD
.
.
.
.

302

TROUBLESOME WORD
EXTREMELY SIMILAR TO START-UP KEY WORD
.
.
.
.
TROUBLESOME WORD

**European Patent Office**

**EUROPEAN SEARCH REPORT**

Application Number

EP 04 01 1234

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 029 130 A (ARIYOSHI TAKASHI) 22 February 2000 (2000-02-22) * abstract; figures 2,4b * | 1,4-6,9, 12-14 | G10L11/02 G10L15/10 |
| Y | | 2,3,7,8, 10,11,15 | |
| Y | US 2003/004714 A1 (ZLATSIN ALEXANDER ET AL) 2 January 2003 (2003-01-02) * abstract; figure 1 * | 2,3,8, 10,11 | |
| Y | US 2002/010575 A1 (KRIECHBAUM WERNER ET AL) 24 January 2002 (2002-01-24) * abstract; figure 3 * * paragraphs [0039] - [0042], [0069], [0070] * | 7,15 | |
| D,A | PATENT ABSTRACTS OF JAPAN vol. 2000, no. 19, 5 June 2001 (2001-06-05) & JP 2001 051694 A (FUJITSU TEN LTD), 23 February 2001 (2001-02-23) * abstract * | 1-15 | |

TECHNICAL FIELDS SEARCHED (Int.Cl.7)

G10L

The present search report has been drawn up for all claims

| Place of search | Date of completion of the search | Examiner |
|---|---|---|
| The Hague | 27 July 2004 | Quélavoine, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 04 01 1234

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2004

| Patent document cited in search report | | Publication date | Patent family member(s) | | Publication date |
|---|---|---|---|---|---|
| US 6029130 | A | 22-02-2000 | JP | 10063289 A | 06-03-1998 |
| US 2003004714 | A1 | 02-01-2003 | NONE | | |
| US 2002010575 | A1 | 24-01-2002 | NONE | | |
| JP 2001051694 | A | 23-02-2001 | NONE | | |